# EUROPÄISCHE PATENTSCHRIFT

(11) **EP 2 156 084 B1**
(45) Veröffentlichungstag und Bekanntmachung des Hinweises auf die Patenterteilung: **14.08.2013**
(21) Anmeldenummer: 08773464.6
(22) Anmeldetag: 16.06.2008
(51) Int. Cl.: F16L 3/18, H02G 3/32

(54) **BEFESTIGUNGSSYSTEM**
FIXING SYSTEM
SYSTEME DE FIXATION

(30) Priorität: 20.06.2007 DE 202007008610 U
(43) Veröffentlichungstag der Anmeldung: 24.02.2010
(73) Patentinhaber: Hellermann Tyton GmbH, 25436 Tornesch (DE)
(72) Erfinder: STOCKER, Konrad, 72401 Haigerloch (DE)
(74) Vertreter: Glawe, Delfs, Moll
(86) Internationale Anmeldenummer: PCT/EP2008/004833
(87) Internationale Veröffentlichungsnummer: WO 2008/155082

(56) Entgegenhaltungen:
- EP-A- 1 424 520
- WO-A-2006/068514
- DE-A1- 2 260 545
- DE-A1- 2 441 297
- DE-U- 1 910 805
- DE-U- 1 975 273
- US-A- 3 404 858

## Beschreibung

Die Erfindung betrifft ein Befestigungssystem zum Befestigen eines strangförmigen Guts an einem Träger. Das Befestigungssystem umfasst ein Fußteil, das dazu ausgelegt ist, an dem Träger befestigt zu werden. Das Befestigungssystem umfasst ferner eine Aufnahmeplatte, auf der das strangförmige Gut im befestigten Zustand aufliegen kann. Ein ahnliches Befestigungssystem ist z.B. in der DE 1975273U offenbart. Bei der Fertigung von LKWs werden Kabel, Pneumatik- und Hydraulikleitungen und vergleichbares strangförmiges Gut an einem Träger, wie beispielsweise dem Rahmen des LKWs befestigt. Bekannt sind Befestigungssysteme der oben beschriebenen Art, die einstückig ausgebildet sind. Das mit dem Rahmen verbundene Fußteil hält die Aufnahmeplatte auf Abstand von dem Rahmen. Das strangförmige Gut wird auf die Aufnahmeplatte aufgelegt und an der Aufnahmeplatte befestigt. Dazu wird ein Binder um das strangförmige Gut und um die Aufnahmeplatte herumgeführt, der Binder wird gespannt und das freie Ende des Binders wird abgeschnitten. Das Befestigen des strangförmigen Guts an dem Rahmen umfasst also eine Mehrzahl von Arbeitsschritten, die zum Teil den Einsatz erheblicher Kraft erfordern.

Der Erfindung liegt die Aufgabe zu Grunde, ein Befestigungssystem der eingangs genannten Art vorzustellen, das eine höhere Bedienungsfreundlichkeit aufweist. Die Aufgabe wird gelöst durch die Merkmale des Anspruchs 1. vorteilhafte Ausführungsformen finden sich in den Unteransprüchen.

Erfindungsgemäß ist ein Zwischenstück vorgesehen, über das die Aufnahmeplatte mit dem Fußteil verbunden werden kann. In einem ersten Verbindungszustand sind das Zwischenstück und die Aufnahmeplatte derart miteinander verbunden, dass das Zwischenstück und die Aufnahmeplatte in Längsrichtung des strangförmigen Guts relativ zueinander verschoben werden können. In einem zweiten Verbindungszustand ist das Zwischenstück mit der Aufnahmeplatte und mit dem Fußteil verbunden, das Zwischenstück stellt also eine Verbindung zwischen der Aufnahmeplatte und dem Fußteil her. Die Aufnahmeplatte und das Zwischenstück können im zweiten Verbindungszustand nicht mehr relativ zueinander verschoben werden, sondern die Aufnahmeplatte ist relativ zu dem Zwischenstück fixiert.

Zunächst werden einige Begriffe erläutert. Die Aufnahmeplatte hat die Funktion, eine Auflagefläche für das strangförmige Gut zu bieten. Zweckmäßigerweise hat die Aufnahmeplatte eine plattenförmige Gestalt, eine dahingehende Beschränkung ist mit dem Begriff Aufnahmeplatte aber nicht verbunden.

Bei einer verschiebbaren Verbindung ist die Bewegungsfreiheit zwischen zwei Bauteilen auf einen Freiheitsgrad eingeschränkt. Durch in Richtung des Freiheitsgrads wirkende Kräfte können in die beiden Bauteile relativ zueinander verschoben werden. Gegenüber Kräften aus anderen Richtungen ist die Verbindung fest, die Bauteile verschieben sich also nicht relativ zueinander. Sind zwei Bauteile relativ zueinander fixiert, so ist die Verbindung fest gegenüber Kräften aus allen Richtungen.

Das erfindungsgemäße Befestigungssystem eröffnet die Möglichkeit, das Fußteil und die Aufnahmeplatte zunächst separat handzuhaben. Das Fußteil kann als separates Teil an dem Träger befestigt werden, die Aufnahmeplatte kann als separates Teil mit dem strangförmigen Gut verbunden werden. Erst in einem nachfolgenden Montageschritt wird die Aufnahmeplatte über das Zwischenstück mit dem Fußteil verbunden. Es besteht die Möglichkeit, die Aufnahmeplatte vor Ort mit dem strangförmigen Gut zu verbinden, alternativ kann das strangförmige Gut bereits mit der daran befestigten Aufnahmeplatte angeliefert werden.

Die Längsausrichtung des strangförmigen Guts zu dem Träger ist vorgegeben. Zum Verbinden der Aufnahmeplatte mit dem Fußteil kann weder das strangförmige Gut relativ zu dem Träger noch die Aufnahmeplatte relativ zu dem strangförmigen Gut verschoben werden. Um ein Verbinden der Aufnahmeplatte mit dem Fußteil zu ermöglichen, muss die Aufnahmeplatte an der richtigen Stelle des strangförmigen Guts angeordnet sein. Um bezüglich der Position der Aufnahmeplatte an dem strangförmigen Gut eine gewisse Toleranz zu erlauben, kann das Zwischenstück im ersten Verbindungszustand relativ zu der Aufnahmeplatte verschoben werden. Wenn also die mit dem strangförmigen Gut verbundene Aufnahmeplatte dem Fußteil nicht exakt gegenüberliegt, wird das Zwischenstück so verschoben, dass es seinerseits dem Fußteil gegenüberliegt. Durch die Verbindung zwischen dem Fußteil und dem Zwischenstück wird zugleich eine Verbindung zwischen der Aufnahmeplatte und dem Fußteil hergestellt.

Im zweiten Verbindungszustand, in dem das Zwischenstück mit dem Fußteil verbunden ist, ist das Zwischenstück gegenüber der Aufnahmeplatte fixiert. Die mit dem erfindungsgemäßen Befestigungssystem hergestellte Verbindung zwischen dem strangförmigen Gut und dem Träger ist also gegenüber Kräften aus allen Richtungen fest.

Zum Fixieren der Aufnahmeplatte relativ zum Zwischenstück kann eine Sperrklinke vorgesehen sein, die mit einer Zahnung zusammenwirkt. Die Zahnung ist in Richtung des strangförmigen Guts ausgerichtet, also in der Richtung, in der das Zwischenstück gegenüber der Aufnahmeplatte verschoben werden kann. Je nachdem, an welcher Stelle die Sperrklinke in die Zahnung eingreift, werden die Aufnahmeplatte und das Zwischenstück in unterschiedlicher Position relativ zueinander fixiert. Die Sperrklinke kann ein Bestandteil des Zwischenstücks sein.

Im ersten Verbindungszustand soll ein freies Verschieben zwischen der Aufnahmeplatte und dem Zwischenstück möglich sein. Vorzugsweise ist die Sperrklinke so gestaltet, dass sie in entspanntem Zustand nicht in Eingriff mit der Zahnung steht. Es ist dann kein Mechanismus erforderlich, der die Sperrklinke im ersten Verbindungszustand von der Zahnung abhebt. Es muss aber die Sperrklinke unter Spannung gesetzt werden, um die Aufnahmeplatte und das Zwischenstück in zweiten Verbindungszustand relativ zueinander zu fixieren. Vorzugsweise ist das Fußteil dazu ausgelegt, die Sperrklinke im zweiten Verbindungszustand unter Spannung zu setzen. Dazu wird das Zwischenstück so mit dem Fußteil verbunden, dass die Sperrklinke an dem Fußteil anliegt, dadurch unter Spannung gesetzt wird und in die Zahnung eingreift.

An dem Zwischenstück und der Aufnahmeplatte können Führungsflächen vorgesehen sein, entlang derer sich das Zwischenstück und die Aufnahmeplatte im ersten Verbindungszustand relativ zueinander bewegen können. Damit das Zwischenstück und die Aufnahmeplatte sich nicht unbeabsichtigt voneinander lösen können, kann ein Anschlag vorgesehen sein, der die relative Bewegungsfreiheit zwischen dem Zwischenstück und der Aufnahmeplatte im ersten Verbindungszustand begrenzt. Wenn der Anschlag federnd aufgehängt ist, kann er beiseite gedrückt werden, um das Zwischenstück und die Aufnahmeplatte voneinander zu lösen. Sind das Zwischenstück und die Aufnahmeplatte getrennt, so kann der Anschlag beiseite gedrückt werden, um das Zwischenstück und die Aufnahmeplatte in den ersten Verbindungszustand zu bringen.

Wenn die Aufnahmeplatte mit dem strangförmigen Gut verbunden ist, kann sie nur noch zusammen mit dem Strang bewegt werden. Um die Aufnahmeplatte parallel zur Richtung des Stranges zu bewegen, müsste der Strang gestreckt beziehungsweise gestaucht werden. Leichter ist es, die Aufnahmeplatte zusammen mit dem strangförmigen Gut in Querrichtung zu bewegen, weil der Strang dazu nur geringfügig gedehnt werden muss. Eine solche Bewegung der Aufnahmeplatte in Querrichtung wird auch durchgeführt, um die Verbindung zum Fußteil herzustellen. Vorzugsweise ist eine Schiebeführung vorgesehen, entlang derer das Zwischenstück beim Verbinden mit dem Fußteil geführt wird. Um das Fußteil und das Zwischenstück gegeneinander zu fixieren, muss lediglich die Schiebeführung in einer bestimmten Stellung festgesetzt werden. Vorzugsweise ist ein Rastelement vorgesehen, um die Schiebeführung im zweiten Verbindungszustand festzusetzen. Da die Ausrichtung der Aufnahmeplatte durch das strangförmige Gut vorgegeben ist, ist es nicht erforderlich, dass die Verbindung zwischen dem Fußteil und dem Zwischenstück auch gegenüber Drehbewegungen fixiert ist. Ist die Verbindung zwischen dem Fußteil und dem Zwischenstück drehbeweglich, so hat dies den Vorteil, dass das Fußteil gegenüber dem Träger nicht ausgerichtet werden muss, sondern in beliebiger Ausrichtung mit dem Träger verbunden werden kann.

Für die Befestigung des Fußteils am Träger kann das Fußteil Vorsprünge aufzuweisen. Die Vorsprünge, die durch eine Öffnung in dem Träger hindurchgeführt werden können, hintergreifen den Träger und halten das Fußteil am Träger. Es können Sperrmittel vorgesehen sein, die die Vorsprünge in dieser Position sperren und die verhindern, dass das Fußteil sich unbeabsichtigt von dem Träger lösen kann.

Das Fußteil kann so ausgebildet sein, dass das Zwischenstück und die Aufnahmeplatte im zweiten Verbindungszustand auf Abstand von dem Träger gehalten werden. Dadurch wird auch das strangförmige Gut auf Abstand von dem Träger gehalten und es ist weniger wahrscheinlich, dass Verschmutzungen sich zwischen dem strangförmigen Gut und dem Träger festsetzen.

Die Erfindung wird nachfolgend unter Bezugnahme auf die beigefügten Zeichnungen anhand einer vorteilhaften Ausführungsform beispielhaft beschrieben. Es zeigen:

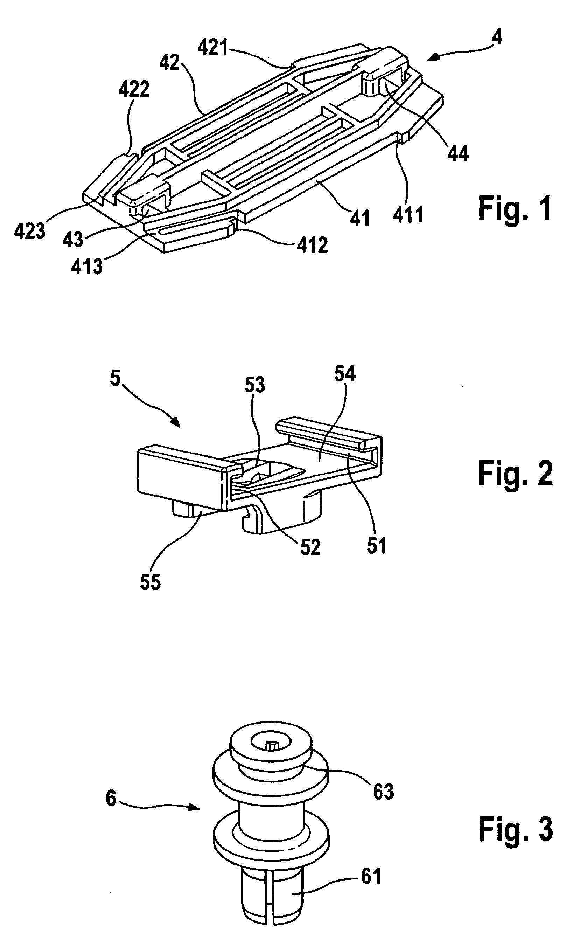

- Fig. 1:: eine erfindungsgemäße Aufnahmeplatte;
- Fig. 2:: ein erfindungsgemäßes Zwischenstück;
- Fig. 3:: ein erfindungsgemäßes Fußteil;
- Fig. 4:: die Aufnahmeplatte aus Fig. 1 und das Zwischenstück aus Fig. 2 im ersten Verbindungszustand;
- Fig. 5:: die Darstellung aus Fig. 4 in einer anderen Ansicht;
- Fig. 6:: das Fußteil aus Fig. 3 verbunden mit einem Träger;
- Fig. 7:: das erfindungsgemäße Befestigungssystem im zweiten Verbindungszustand; und
- Fig. 8:: das erfindungsgemäße Befestigungssystem an einem Träger befestigt.

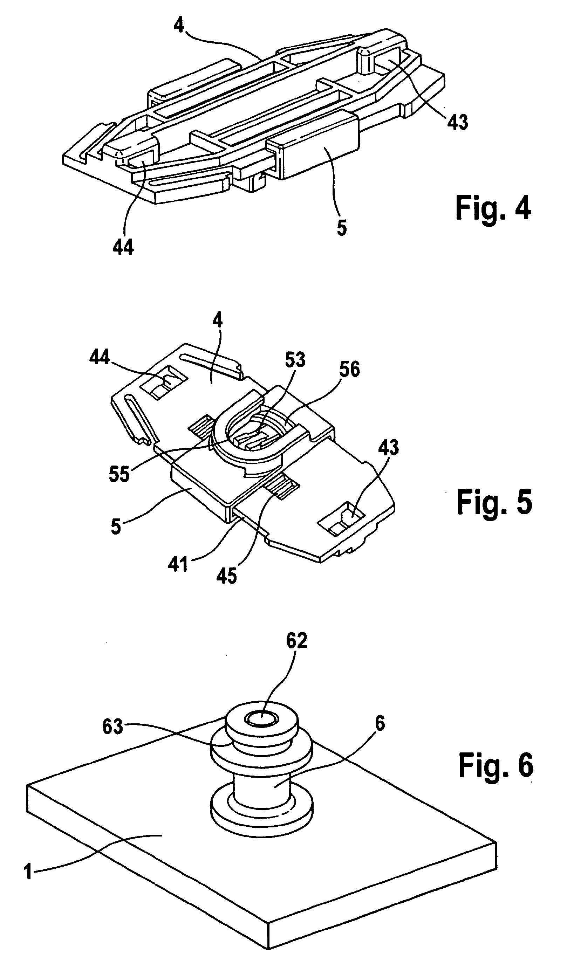

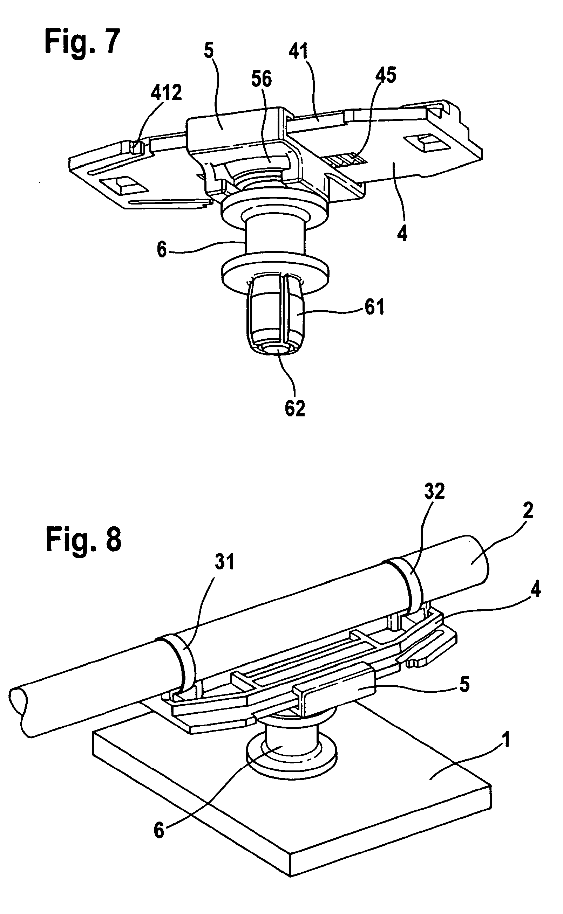

Ein erfindungsgemäßes Befestigungssystem umfasst eine Aufnahmeplatte 4, ein Zwischenstück 5 und ein Fußteil 6. Das Fußteil 6 ist dazu bestimmt, wie in Fig. 6 gezeigt mit einem Träger 1 verbunden zu werden. An der Aufnahmeplatte 4 können Kabel, Leitungen oder ähnliche strangförmige Güter 2 befestigt werden. Die Aufnahmeplatte 4 umfasst zu diesem Zweck Ösen 43, 44, durch die Binder 31, 32 hindurchgeführt und um das strangförmige Gut 2 herumgelegt werden können. Die Aufnahmeplatte 4, das Zwischenstück 5 und das Fußteil 6 können wie in Fig. 8 gezeigt miteinander verbunden werden, so dass das strangförmige Gut 2 an dem Träger 1 befestigt ist.

Die Aufnahmeplatte 4 weist Führungsflächen 41, 42 auf, die dazu bestimmt sind, mit Führungsflächen 51, 52 des Zwischenstücks 5 zusammenzuwirken. Die Führungsflächen 41, 42, die parallel zu der Richtung des strangförmigen Guts 2 ausgerichtet sind, sind durch Anschläge 411, 412 und 421, 422 begrenzt. Die Anschläge 412, 422 sind über federnde Verbindungen 413, 423 mit dem Körper der Aufnahmeplatte 4 verbunden. Werden die Anschläge 412, 422 entgegen der Federkraft nach innen gedrückt, so ragen sie in seitlicher Richtung nicht mehr über die Führungsflächen 41, 42 hinaus. Wird das Zwischenstück 5 mit den Führungsflächen 51, 52 auf die Anschläge 412, 422 aufgeschoben, so werden die Anschläge 412, 422 nach innen gedrückt und das Zwischenstück 5 kann über die Anschläge 412, 422 hinweggeführt werden, um die Aufnahmeplatte 4 und das Zwischenstück 5 in den in Fig. 4 und 5 gezeigten ersten Verbindungszustand zu bringen. Im ersten Verbindungszustand liegen die Führungsflächen 51, 52 des Zwischenstücks 5 an den Führungsflächen 41, 42 der Aufnahmeplatte 4 an und das Zwischenstück 5 kann gegenüber der Aufnahmeplatte 4 in den durch die Anschläge 411, 412, 421 und 422 vorgegebenen Grenzen verschoben werden.

An der dem Zwischenstück 5 zugewandten Seite weist die Aufnahmeplatte 41 eine Zahnung 45 auf. Das Zwischenstück 5 ist mit einer Sperrklinke 53 ausgestattet, die dazu bestimmt ist, mit der Zahnung 45 zusammenzuwirken. In entspanntem Zustand ragt die Sperrklinke 53 nicht über die Fläche 54, mit der das Zwischenstück 5 auf der Aufnahmeplatte 4 aufliegt, hinaus. Das Zwischenstück 5 kann also frei gegenüber der Aufnahmeplatte 4 verschoben werden, die Sperrklinke 53 ist nicht mit der Zahnung 45 in Eingriff. Durch Spannen der Sperrklinke 53 kann die Sperrklinke 53 mit der Zahnung 45 in Eingriff gebracht werden und das Zwischenstück 5 gegenüber der Aufnahmeplatte 4 fixiert werden.

Das Fußteil 6 weist Vorsprünge 61 auf. Zum Befestigen des Fußteils 6 an einem Träger 1 werden die Vorsprünge 61 durch eine Öffnung in dem Träger 1 hindurchgeführt. Auf der anderen Seite des Trägers 1 werden die Vorsprünge 61 gespreizt und hintergreifen den Träger 1. Ein in das Fußteil 6 eingeführter Stift 62 fixiert die Vorsprünge 61 in der gespreizten Stellung. Das Fußteil 6 ist fest mit dem Träger 1 verbunden.

Um das Zwischenstück 5 an dem Fußteil 6 zu befestigen, weist das Zwischenstück 51 ein an den Kopf 63 des Fußteils 6 angepasstes Profil 55 auf, das zusammen mit dem Kopf 63 des Fußteils 6 eine Schiebeführung bildet. Das Profil 55 ist quer zu dem strangförmigen Gut 2 ausgerichtet. Das Zwischenstück 5 umfasst weiterhin ein Rastelement 56, das einrastet, wenn das Profil 5 bis zum Anschlag auf den Kopf 63 des Fußteils 6 aufgeschoben ist. Das Rastelement 56 liegt dann am Außenumfang des Kopfes 63 an und verhindert, dass das Profil 55 wieder von dem Fußteil 6 abgezogen werden kann ist.

Beim Aufschieben des Zwischenstücks 5 auf das Fußteil 6 liegt der Kopf 63 des Fußteils 6 an der Sperrklinke 53 an. Die Sperrklinke 53 wird durch den Kopf 63 unter Spannung gesetzt und greift dadurch in die Zahnung 45 ein. Die Aufnahmeplatte 4 wird gegenüber dem Zwischenstück 5 fixiert.

Das Fußteil 6 ist rotationssymmetrisch, das Zwischenstück 5 ist also drehbar mit dem Fußteil 6 verbunden. Wie Figur 8 gezeigt, ist das Fußteil 6 so ausgebildet, dass die Aufnahmeplatte 4 auf Abstand von dem Träger 1 gehalten wird.

## Patentansprüche

1. Befestigungssystem zum Befestigen eines strangförmigen Guts (2) an einem Träger (1) umfassend ein an dem Träger (1) anzubringendes Fußteil (6) und eine Aufnahmeplatte (4) für das strangförmige Gut (2), **dadurch gekennzeichnet, dass** ein Zwischenstück (5) zum Verbinden der Aufnahmeplatte (4) mit dem Fußteil (6) vorgesehen ist, dass in einem ersten Verbindungszustand das Zwischenstück (5) und die Aufnahmeplatte (4) derart miteinander verbunden sind, dass sie in Richtung des strangförmigen Guts (2) relativ zueinander verschiebbar sind, dass in einem zweiten Verbindungszustand das Zwischenstück (5) mit der Aufnahmeplatte (4) und mit dem Fußteil (6) verbunden ist und die Aufnahmeplatte (4) relativ zu dem Zwischenstück (5) fixiert ist, und dass eine mit einer Zahnung zusammenwirkende Sperrklinke (53) zum Fixieren der Aufnahmeplatte relativ zum Zwischenstück (5) vorgesehen ist, die im zweiten Verbindungszustand an dem Fußteil (6) anliegt und von dem Fußteil (6) in Eingriff mit der Zahnung (45) gehalten wird.

2. Befestigungssystem nach Anspruch 1, **dadurch gekennzeichnet, dass** die Sperrklinke (53) an dem Zwischenstück (5) angeordnet ist.

3. Befestigungssystem nach Anspruch 1 oder 2, **dadurch gekennzeichnet, dass** die Sperrklinke (53) in entspanntem Zustand nicht in Eingriff mit der Zahnung (45) steht.

4. Befestigungssystem nach einem der Ansprüche 1 bis 3,
**dadurch gekennzeichnet, dass** Führungsflächen (51, 52) an dem Zwischenstück (5) und Führungsflächen (41, 42) an der Aufnahmeplatte (4) vorgesehen sind und dass die Führungsflächen (41, 42, 51, 52) dazu ausgelegt sind, im ersten Verbindungszustand zusammenzuwirken.

5. Befestigungssystem nach einem der Ansprüche 1 bis 4,
**dadurch gekennzeichnet, dass** ein Anschlag (411, 412, 421, 422) vorgesehen ist, der die Bewegungsfreiheit zwischen der Aufnahmeplatte (4) und dem Zwischenstück (5) im ersten Verbindungszustand begrenzt.

6. Befestigungssystem nach Anspruch 5, **dadurch gekennzeichnet, dass** der Anschlag (412, 422) federnd aufgehängt ist.

7. Befestigungssystem nach einem der Ansprüche 1 bis 6,
**dadurch gekennzeichnet, dass** eine Schiebeführung (55, 63) zum Herstellen der Verbindung zwischen dem Fußteil (6) und dem Zwischenstück (5) vorgesehen ist.

8. Befestigungssystem nach Anspruch 7, **dadurch gekennzeichnet, dass** die Schiebeführung (55, 63) quer zur Richtung des strangförmigen Guts (2) ausgerichtet ist.

9. Befestigungssystem nach Anspruch 7 oder 8, **dadurch gekennzeichnet, dass** ein Rastelement (56) zum Sperren der Schiebeführung (55, 63) im zweiten Verbindungszustand vorgesehen ist.

10. Befestigungssystem nach einem der Ansprüche 1 bis 9, **dadurch gekennzeichnet, dass** im zweiten Verbindungszustand das Fußteil (6) und das Zwischenstück (5) drehbeweglich zueinander sind.

11. Befestigungssystem nach einem der Ansprüche 1 bis 10, **dadurch gekennzeichnet, dass** das Fußteil (6) Vorsprünge (61) zum Hintergreifen des Trägers (1) umfasst.

12. Befestigungssystem nach Anspruch 11, **dadurch gekennzeichnet, dass** Sperrmittel (62) zum Sperren der Vorsprünge (61) vorgesehen sind.

## Claims

1. Fastening system for fastening a strand-like article (2) on a carrier (1), comprising a foot part (6), to be fitted on the carrier (1), and an accommodating plate (4) for the strand-like article (2), **characterized in that** an intermediate component (5) is provided for connecting the accommodating plate (4) to the foot part (6), **in that**, in a first connecting state, the intermediate component (5) and the accommodating plate (4) are connected to one another such that they can be displaced relative to one another in the direction of the strand-like article (2), **in that**, in a second connecting state, the intermediate component (5) is connected to the accommodating plate (4) and to the foot part (6) and the accommodating plate (4) is fixed relative to the intermediate component (5), and **in that** a catch (53), which interacts with a toothing formation, is provided for fixing the accommodating plate (4) relative to the intermediate component (5), the catch, in the second connecting state, butting against the foot part (6) and being kept in engagement with the toothing formation (45) by the foot part (6).

2. Fastening system according to Claim 1, **characterized in that** the catch (53) is arranged on the intermediate component (5).

3. Fastening system according to Claim 1 or 2, **characterized in that** the catch (53), when relieved of stressing, does not engage with the toothing formation (45).

4. Fastening system according to one of Claims 1 to 3, **characterized in that** guide surfaces (51, 52) are provided on the intermediate component (5) and guide surfaces (41, 42) are provided on the accommodating plate (4), and **in that** the guide surfaces (41, 42, 51, 52) are designed to interact in the first connecting state.

5. Fastening system according to one of Claims 1 to 4, **characterized by** the provision of a stop (411, 412, 421, 422) which limits the freedom of movement between the accommodating plate (4) and the intermediate component (5) in the first connecting state.

6. Fastening system according to Claim 5, **characterized in that** the stop (412, 422) is suspended in a resilient manner.

7. Fastening system according to one of Claims 1 to 6, **characterized in that** a sliding guide (55, 63) is provided for making the connection between the foot part (6) and the intermediate component (5).

8. Fastening system according to Claim 7, **characterized in that** the sliding guide (55, 63) is oriented transversely to the direction of the strand-like article (2).

9. Fastening system according to Claim 7 or 8, **characterized in that** a latching element (56) is provided for blocking the sliding guide (55, 63) in the second connecting state.

10. Fastening system according to one of Claims 1 to 9, **characterized in that**, in the second connecting state, the foot part (6) and the intermediate component (5) can be rotated in relation to one another.

11. Fastening system according to one of Claims 1 to 10, **characterized in that** the foot part (6) comprises protrusions (61) for engaging behind the carrier (1).

12. Fastening system according to Claim 11, **characterized in that** blocking means (62) are provided for blocking the protrusions (61).

## Revendications

1. Système de fixation permettant de fixer un produit (2) en forme de barre sur un support (1), comportant un pied (6) à fixer au support (1) et une plaque de réception (4) pour le produit (2) en forme de barre, **caractérisé en ce qu'**il est prévu une pièce intermédiaire (5) destinée à relier la plaque de réception (4) au pied (6), **en ce que** dans une première position d'assemblage, la pièce intermédiaire (5) et la plaque de réception (4) sont reliées l'une à l'autre de telle sorte qu'elles peuvent être déplacées l'une par rapport à l'autre dans la direction du produit (2) en forme de barre, **en ce que** dans une deuxième position d'assemblage, la pièce intermédiaire (5) est reliée à la plaque de réception (4) et au pied (6) et ladite plaque de réception (4) est immobilisée par rapport à la pièce intermédiaire (5), et **en ce qu'**il est prévu un cliquet d'arrêt (53), qui coopère avec une denture, est destiné à immobiliser la plaque de réception par rapport à la pièce intermédiaire (5) et qui est en appui contre le pied (6) dans la deuxième position d'assemblage et est maintenu par le pied (6) en engrènement avec la denture (45).

2. Système de fixation selon la revendication 1, **caractérisé en ce que** le cliquet d'arrêt (53) est disposé sur la pièce intermédiaire (5).

3. Système de fixation selon la revendication 1 ou 2, **caractérisé en ce que** le cliquet d'arrêt (53), à l'état détendu, n'engrène pas avec la denture (45).

4. Système de fixation selon l'une quelconque des revendications 1 à 3, **caractérisé en ce que** des surfaces de guidage (51, 52) sont prévues sur la pièce intermédiaire (5) et des surfaces de guidage (41, 42) sont prévues sur la plaque de réception (4), et **en ce que** les surfaces de guidage (41, 42, 51, 52) sont configurées pour coopérer dans la première position d'assemblage.

5. Système de fixation selon l'une quelconque des revendications 1 à 4, **caractérisé en ce qu'**il est prévu une butée (411, 412, 421, 422) qui limite la liberté de mouvement entre la plaque de réception (4) et la pièce intermédiaire (5) dans la première position d'assemblage.

6. Système de fixation selon la revendication 5, **caractérisé en ce que** la butée (412, 422) est suspendue de manière flexible.

7. Système de fixation selon l'une quelconque des revendications 1 à 6, **caractérisé en ce qu'**il est prévu un guidage par glissement (55, 63) pour établir la liaison entre le pied (6) et la pièce intermédiaire (5).

8. Système de fixation selon la revendication 7, **caractérisé en ce que** le guidage par glissement (55, 63) est orienté transversalement à la direction du produit (2) en forme de barre.

9. Système de fixation selon la revendication 7 ou 8, **caractérisé en ce qu'**il est prévu un élément de blocage (56) pour verrouiller le guidage par glissement (55, 63) dans la deuxième position d'assemblage.

10. Système de fixation selon l'une quelconque des revendications 1 à 9, **caractérisé en ce que**, dans la deuxième position d'assemblage, le pied (6) et la pièce intermédiaire (5) sont aptes à tourner l'un par rapport à l'autre.

11. Système de fixation selon l'une quelconque des revendications 1 à 10, **caractérisé en ce que** le pied (6) comporte des saillies (61) destinées à s'engager dans le support (1).

12. Système de fixation selon la revendication 11, **caractérisé en ce que** des moyens de verrouillage (62) sont prévus pour verrouiller les saillies (61).
